# DEMANDE DE BREVET EUROPEEN

(11) **EP 3 282 335 A1**
(43) Date de publication de la demande: **14.02.2018**
(21) Numéro de dépôt: 17185061.3
(22) Date de dépôt: 07.08.2017
(51) Int. Cl.: G05D 1/00

(54) **MODULE INTÉGRÉ DE CONTRÔLE/COMMANDE POUR DRONE VOLANT**

(30) Priorité: 08.08.2016 FR 1657624
(71) Demandeur: Parrot Drones, 75010 Paris (FR)
(72) Inventeur: La désignation de l'inventeur n'a pas encore été déposée
(74) Mandataire: Dupuis-Latour, Dominique

(57) **Abrégé**

Le module intègre dans un même boitier monobloc (48) un circuit électronique (100) et une pluralité de capteurs d'attitude, d'altitude, de vitesse, d'orientation et/ou de position du drone (104-116). Il intègre également un circuit électronique de puissance (200) recevant des consignes de commande élaborées par le processeur du circuit électronique en fonction des données délivrées par les capteurs intégrés, et délivrant en sortie des signaux correspondants pour l'alimentation directe en courant ou en tension des moyens propulseurs du drone et des gouvernes.

## Description

L'invention concerne les appareils motorisés volants pilotés à distance, ci-après désignés généralement sous la dénomination de "drones".

L'invention s'applique tout particulièrement aux drones à voilure fixe, notamment de type "aile volante" tel que par exemple le modèle *eBee* de SenseFly, Cheseaux-Lausanne, Suisse, qui est un drone de cartographie professionnelle de terrain, ou encore le modèle *Disco* récemment présenté par Parrot SA, Paris, France.

Ces drones sont pilotés à distance par un utilisateur muni d'une télécommande lui permettant d'envoyer des instructions de pilotage telles que montée, descente, virage à droite ou à gauche, accélération/ralentissement, etc., et de visualiser sur un écran installé sur la télécommande les images captées par une caméra du drone. Le drone, de son côté, génère des commandes de contrôle de vol en fonction des instructions reçues de la télécommande : régime moteur du système de propulsion, commandes de gouvernes, etc. Ces commandes sont asservies en fonction de données fournies par de multiples capteurs embarqués par le drone, tels que centrale inertielle (accéléromètres et gyromètres trois axes), capteurs d'altitude (baromètre, télémètre à ultrasons), dispositif de mesure de la vitesse air et/ou de la vitesse sol, etc.

L'invention vise plus précisément l'intégration mécanique et fonctionnelle des différents éléments embarqués par le drone tels que capteurs divers, caméra(s), circuits de réception radiofréquence, processeur numérique, circuits de génération des consignes de commande de vol et de commande du ou des système(s) de propulsion et des gouvernes, système de pilotage autonome, etc.

La multiplicité des éléments conduit en général à une conception mécanique assez complexe, avec de nombreuses pièces et sous-ensembles à assembler et à réunir de la façon la plus compacte possible à l'intérieur du corps du drone. Le EP 2 937 123 A1 (Parrot) décrit une telle structure pour un drone de type quadricoptère, où les les composants, capteurs et caméras sont assemblés sur des cartes de circuit imprimé elles-mêmes montées sur une platine-support portant sur ses deux faces d'autres composants et éléments constitutifs des circuits du drone.

La conception d'une telle structure est une tâche complexe, donc coûteuse, de même que son assemblage, très difficile à automatiser même pour une production en grande série.

De plus, en cas d'accident, par exemple de chute brutale et inopinée du drone au sol ou de rencontre avec un obstacle lors d'une phase de vol, les différents éléments de l'ensemble ne sont protégés que par la coque du corps de drone et peuvent être aisément endommagés par le choc ou la chute. Et si une réparation s'impose, il sera nécessaire de démonter complètement le drone, échanger ou ressouder le composant endommagé (à supposer que cela soit possible), etc.

Il existe des modules compacts tels que le *Erle-Brain* de Erlerobotics ou le *Pixhawk* de 3D Robotics, qui intègrent dans un même boitier un certain nombre de capteurs, notamment gyrométriques, accélérométriques et barométriques, et éventuellement une caméra de prise de vues, ainsi que des circuits électroniques avec un processeur de données programmable. Une connectique abondante permet de coupler le module à d'autres capteurs non intégrés au boitier (GPS, télémètre, etc.), à des circuits de traitement des données élaborées par le processeur, à un bus USB ou Ethernet pour le transfert de ces données, etc.

Ces deux modules *Erle-Brain* et *Pixhawk,* ainsi que la manière de les mettre en oeuvre pour construire un drone pleinement fonctionnel, sont notamment décrits dans des citations Internet telles que "Erle-Brain Linux Autopilot" (sur ardupilot.org/copter/docs/common-erle-brain-linux-autopilot, 3 avril 2016), "PIXHAWK Autopilot/Flight Management Unit" (sur pixhawk.org/modules/pixhawk, 10 janvier 2014), ou encore "Phantom FPV Flying Wing-PX4 Autopilot Platform" (sur pixhawk.org/platforms/planes /phantom_fpv_flying_wing, 31 janvier 2014).

En particulier, il ressort de ces documents que le module *Erle-Brain* ou *Pixhawk* doit être couplé à un circuit dénommé "ESC" (*Electronic Speed Control*) pour la commande du système de propulsion du drone. Le circuit ESC est intercalé entre le moteur d'hélice et connecté à une sortie PWM du module *Erle-Brain* ou *Pixhawk,* cette sortie PWM délivrant des signaux numériques modulés en largeur d'impulsion, de même nature que ceux pilotant les servomécanismes des gouvernes.

Ces modules *Erle-Brain* et *Pixhawk* sont donc incapables, à eux seuls, de commander le système de propulsion du drone et, de fait, ne permettent pas d'assurer de façon autonome le contrôle intégral de ce dernier.

Il subsiste donc le besoin d'une structure permettant d'intégrer de la façon la plus rationnelle possible tous les circuits et capteurs nécessaires à l'exécution des différentes fonctions réalisées par le drone, tout particulièrement le contrôle de vol.

Le problème de l'invention est d'obtenir un tel module intégré qui, non seulement, incorpore la totalité des capteurs et circuits nécessaires à l'obtention d'un drone totalement fonctionnel, mais puisse également être couplé sans aucun intermédiaire au(x) système(s) de propulsion du drone et aux servomoteurs des gouvernes sans ajout d'autres éléments ou circuits.

Un tel module devra pouvoir assurer des fonctions de pilotage automatique, c'est-à-dire tout à la fois :
i) recevoir des instructions de pilotage en provenance de la télécommande et/ou générer en interne de telles instructions par un système intégré de pilotage en vol autonome ;
ii) à partir de ces instructions et des données délivrées par les capteurs (capteurs tous intégrés dans le module), élaborer des consignes de pilotage et convertir ces consignes en signaux de commandes du système de propulsion et des servomoteurs des gouvernes ; et
iii) appliquer directement ces signaux, par exemple en générant des courants d'alimentation modulés, ceci sans étage intermédiaire entre le module et le(s) moteur(s) de propulsion et les servomoteurs.

En d'autres termes, le problème est de disposer d'un module qui permette non seulement de traiter les "signaux faibles", résultant des traitements numériques, mais également de générer des courants/tensions d'alimentation des composants de puissance tels que moteur(s) d'hélice et servomoteurs de commande des gouvernes.

Subsidiairement, l'invention vise à proposer un tel module qui présente un caractère multiplateforme, c'est-à-dire qui soit utilisable indifféremment par plusieurs drones de types différents, en ne nécessitant qu'une simple adaptation logicielle pour lui permettre de fonctionner avec un type de drone particulier. Il devient ainsi possible de rationaliser l'étude et la fabrication du module, donc d'en diminuer le coût de revient, le même module étant utilisable sur plusieurs types de drones. Une économie substantielle pourra être également réalisée sur la connectique, réduite au strict minimum nécessaire.

Un autre avantage est qu'un utilisateur possédant plusieurs drones différents pourra utiliser un unique module pour faire voler ses drones, par simple échange standard d'un appareil à l'autre. Il n'est nécessaire de disposer pour cela d'aucune compétence en aéromodélisme, contrairement à ce qui a pu être proposé jusqu'à présent dans l'état de la technique.

Enfin, l'intégration dans un même module compact de la totalité des éléments permettant de rendre le drone fonctionnel assure une excellente protection physique de ces éléments, beaucoup mieux que lorsqu'ils sont situés épars à l'intérieur du corps du drone. De plus, en cas d'accident le module, intact, pourra être récupéré en l'extrayant du drone endommagé et réutilisé en l'insérant tel quel dans un nouveau drone pour rendre celui-ci immédiatement fonctionnel.

Plus précisément, l'invention propose un module intégré de contrôle/commande pour un drone volant à voilure fixe comprenant un système de propulsion et des gouvernes. Ce module est d'un type comprenant, de manière en elle-même connue comme les modules *Erle-Brain* et *Pixhawk* mentionnés plus haut, un boitier dans lequel sont intégrés : un circuit électronique comportant un pilote automatique apte à contrôler le système de propulsion et les gouvernes du drone en pilotage manuel assisté et/ou en vol autonome, ainsi qu'une pluralité de capteurs d'attitude, d'altitude, de vitesse, d'orientation et/ou de position du drone ; une interface de connexion au système de propulsion et aux gouvernes ; et une interface de connexion à une batterie.

Le pilote automatique est apte à élaborer des consignes de commande dudit système de propulsion et desdites gouvernes, ces consignes de commande étant élaborées en fonction des données délivrées par ladite pluralité de capteurs intégrés au boitier, et d'instructions externes de pilotage reçues par le pilote automatique en provenance d'un appareil de télécommande distant, et/ou d'instructions internes de pilotage générées au sein du pilote automatique en vol autonome.

De façon caractéristique de l'invention, le boitier intègre en outre un circuit électronique de puissance comprenant ladite interface de connexion au système de propulsion et aux gouvernes, et apte à recevoir en entrée lesdites consignes de commande élaborées par le pilote automatique du circuit électronique, et délivrer en sortie des signaux correspondants d'alimentation du système de propulsion et d'alimentation des gouvernes, les signaux d'alimentation du système de propulsion étant des signaux d'alimentation directe du système de propulsion, comprenant des courants contrôlés aptes à faire varier le régime moteur dudit système de propulsion.

Selon diverses caractéristiques subsidiaires avantageuses :
- le module intègre en outre au moins une caméra video, mécaniquement solidaire du module ;
- le module intègre en outre une interface de connexion du circuit électronique à au moins une antenne radiofréquence ;
- le module intègre en outre une interface d'échange de données externes avec ledit circuit électronique ;
- le circuit électronique est réalisé sur une première carte et le circuit électronique de puissance est réalisé sur une seconde carte, distincte de la première carte ;
- la seconde carte comprend en outre un circuit de protection du circuit électronique de puissance contre les surintensités et/ou surtensions.

L'invention a également pour objet un drone volant à voilure fixe comprenant un corps de drone et des moyens de contrôle de vol liés au corps de drone, comprenant un système de propulsion et des gouvernes, le corps du drone comprenant un logement apte à recevoir de manière séparable un module intégré tel qu'exposé ci-dessus, la forme intérieure du logement du corps du drone étant avantageusement complémentaire de la forme extérieure de l'enveloppe du boitier du module intégré.

L'invention a également pour objet un tel drone, incluant en outre le module intégré tel qu'exposé ci-dessus.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone à voilure fixe de type aile volante, évoluant dans les airs sous le contrôle d'un appareil de télécommande distant.
La Figure 2 est un schéma très simplifié des différents blocs fonctionnels du drone et de l'appareil de télécommande distant.
La Figure 3 est une perspective éclatée du corps du drone, montrant le module intégré de contrôle/commande selon l'invention, extrait du corps du drone, ainsi qu'un couvercle de fermeture du logement du module.
Les Figures 4a, 4b et 4c sont des vues à plus grande échelle du module intégré de contrôle/commande de l'invention, respectivement en perspective de trois-quarts arrière, en perspective de trois-quarts avant et en élévation en vue arrière.
La Figure 5 est une vue en élévation de côté du module intégré de l'invention, montrant sous forme schématique les différents éléments et capteurs intégrés au sein de ce module.
La Figure 6 est un schéma par blocs fonctionnels d'un pilote automatique intégré au sein du module selon l'invention.

On va maintenant décrire un exemple de réalisation du dispositif de l'invention.

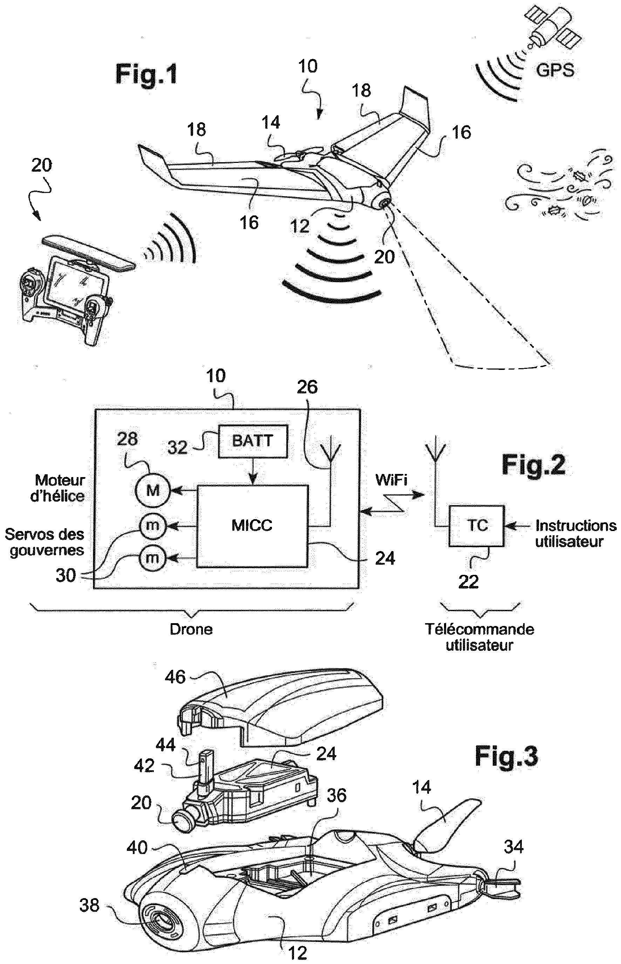

Sur la Figure 1, on a illustré un drone 10, ici un drone à voilure fixe de type aile volante tel que le modèle *Disco* de Parrot.

Ce drone 10 comprend un corps de drone (fuselage) 12 muni en partie arrière d'un système de propulsion composé par exemple d'un moteur et d'une hélice 14, et latéralement de deux ailes 16, ces ailes prolongeant le corps de drone 12 dans la configuration illustrée de type "aile volante". Du côté du bord de fuite, les ailes 16 sont munies de gouvernes 18 orientables au moyen de servomoteurs pour contrôler la trajectoire du drone.

Le drone est également muni d'une caméra frontale 20 permettant d'obtenir une image de la scène vers laquelle progresse le drone.

Le drone 10 est piloté par un appareil de télécommande distant 22 pourvu d'un écran tactile configuré pour afficher l'image captée par la caméra 20, ainsi que de diverses commandes de pilotage à disposition de l'utilisateur. L'appareil de télécommande 22 est par exemple le modèle *Skycontroller* de Parrot, sur lequel a été montée une tablette numérique multimédia à écran tactile. L'appareil de télécommande 22 est également pourvu de moyens de liaison radio avec le drone, par exemple de type réseau local WiFi (IEEE 802.11), pour l'échange bidirectionnel de données : du drone 10 vers l'appareil de télécommande 22 notamment par la transmission de l'image captée par la caméra 20, et de l'appareil de télécommande 22 vers le drone pour l'envoi à ce dernier d'instructions de pilotage. L'utilisateur peut également faire usage de lunettes de pilotage en immersion, dites "lunettes FPV" (*First Person View*).

La Figure 2 est un schéma fonctionnel très simplifié de l'ensemble constitué par le drone 10 et l'appareil de télécommande 22. De façon caractéristique de l'invention, le drone met en oeuvre un module intégré de contrôle/commande MICC 24, dont les aspects mécaniques et fonctionnels seront décrits en détail ci-après. Ce module intégré 24 est relié à une ou plusieurs antennes WiFi 26 du drone, au système de propulsion 28 pour l'entrainement de l'hélice 14 du drone, et aux servomoteurs 30 de commande des gouvernes 18 pour le contrôle aérodynamique de la trajectoire du drone.

Dans l'exemple illustré d'un drone de type "aile volante", le système de propulsion 28 est unique et les servomoteurs 30 sont au nombre de deux, mais il ne s'agit là que d'un exemple illustratif, un drone pouvant être doté de plusieurs hélices de propulsion donc de plusieurs systèmes de propulsion correspondants, et de gouvernes supplémentaires, par exemple dans le cas d'un drone muni d'une dérive en partie arrière.

Le drone 10 incorpore également une batterie d'alimentation 32 délivrant les tensions nécessaires aux différents composants inclus dans le module 24, ainsi que les tensions et courants nécessaires à l'entrainement du système de propulsion 28 et des servomoteurs 30.

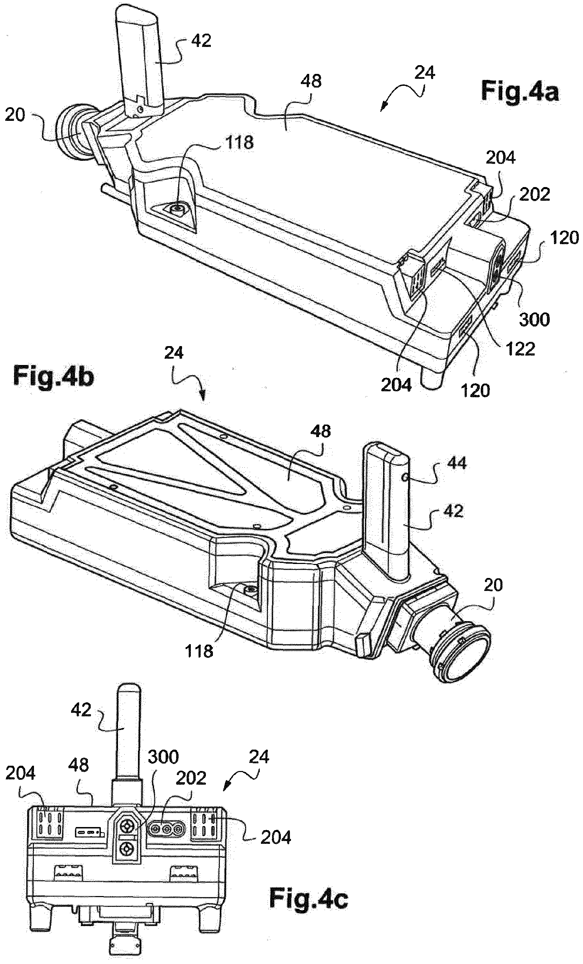

En référence aux Figures 3, 4a, 4b et 4c, on va maintenant décrire les aspects mécaniques du module intégré 24.

La Figure 3 est un éclaté montrant le corps de drone 12, ici illustré avec les ailes démontées, ne laissant apparaitre que les palettes 34 de commande des gouvernes, dont la position est contrôlée par les servomoteurs respectifs 30 de la Figure 2.

Le corps de drone 12 comporte un logement central 36, dans lequel vient s'insérer le module 24, logement 36 et module 24 ayant des formes homologues pour permettre un emboitement aisé. Une fois le module intégré 24 placé dans le logement 36, le corps de drone est refermé par un couvercle 46 permettant de conserver au drone ses propriétés aérodynamiques et également de protéger le module 24 contre les chocs et chutes éventuels.

Le corps de drone 12 comporte en partie avant une ouverture 38 pour le passage de l'objectif de la caméra 20 portée par le module 24.

Il comporte également une encoche 40 permettant le passage et l'émergence d'un élément de superstructure 42, qui fait saillie en direction radiale perpendiculairement au corps de drone 12, et se présente extérieurement sous la forme d'une pièce tubulaire aplatie s'étendant approximativement dans un plan longitudinal médian du corps de drone 12.

L'une des fonctions de l'élément de superstructure 42 est de servir de sonde de Pitot pour la mesure de la vitesse air, cet élément étant muni en partie frontale d'une prise d'air de pression dynamique permettant la mesure de la vitesse du drone par rapport à l'air (vent relatif). Cet élément de superstructure 42 et les différentes fonctions qu'il permet d'assurer, outre celui de sonde de Pitot, sont décrites notamment dans la demande française FR 1652148 du 15.03.2013, au nom de Parrot Drones, pour "*élément de superstructure pour drones volants, notamment un drone de type aile volante*"*.*

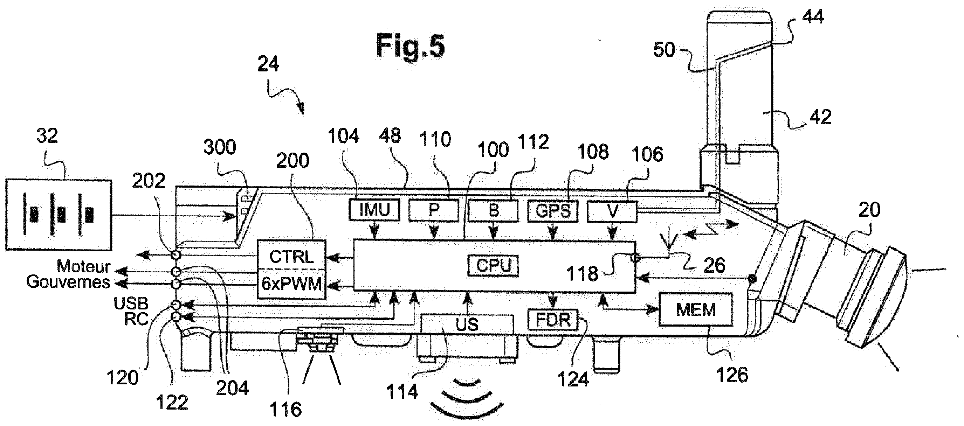

Comme illustré Figures 4a, 4b, 4c et 5, le module 24 se présente sous forme d'un boitier 48 par exemple un boitier monobloc 4 intégrant en son sein tous les éléments et circuits nécessaires au pilotage du drone, la connectique étant réduite au minimum, comme on va maintenant l'expliquer en détail.

La Figure 5 montre plus précisément, sous forme schématique, les différents éléments et capteurs intégrés au sein du boitier 48 du module 24 de l'invention.

Le module intégré comporte tout d'abord un circuit électronique 100 centralisant tous les circuits et composants "courant faible" et implémentant un système de pilote automatique exécutant tous les calculs numériques requis pour le contrôle du système de propulsion et des gouvernes du drone permettant le vol du drone. Le circuit électronique 100 supporte un certain nombre de capteurs, par exemple :
- une centrale inertielle (IMU) 104 comprenant des accéléromètres et des gyromètres trois axes ;
- un capteur 106 de mesure de la vitesse air du drone, relié à la prise de pression dynamique 44 de l'élément de superstructure 42 par l'intermédiaire d'un conduit 50 ;
- un module GPS 108 donnant la position absolue du drone dans un repère géographique ;
- un capteur barométrique 110 permettant de déterminer les variations d'altitude du drone (variations instantanées et variations par rapport à une altitude de départ connue) ;
- un capteur magnétométrique 112 donnant l'orientation du drone par rapport au nord géographique ;
- un capteur télémétrique à ultrasons 114 donnant l'altitude du drone par rapport au terrain survolé ; et
- une caméra à visée verticale 116 donnant une image du terrain survolé et permettant de déterminer, par un traitement d'images, la vitesse du drone par rapport à ce terrain (vitesse sol, par opposition à la vitesse air donnée par le capteur 106).

En ce qui concerne la caméra frontale 20, celle-ci est mécaniquement supportée par le module intégré de contrôle/commande 24, et reliée à l'intérieur du boitier 48 au circuit électronique 100 pour permettre le traitement et l'enregistrement des données délivrées par le capteur d'images de la caméra. Les traitements comprennent par exemple le fenêtrage en temps réel par logiciel de l'image délivrée par une caméra grand-angle haute définition munie d'un objectif à champ hémisphérique de type hypergone (*fisheye*) couvrant un champ d'environ 180°, technique mise en oeuvre notamment dans l'appareil *Disco* précité et décrite dans le EP 2 933 775 A1 (Parrot).

Le circuit électronique 100 supporte également :
- une ou plusieurs entrées 118 pour le couplage à une antenne radiofréquence 26 permettant la communication bidirectionnelle avec l'appareil de télécommande distant ;
- une ou plusieurs prises USB 120 utilisables à diverses fins par exemple pour la récupération des vidéos ou photos prises par la caméra du drone, pour le test des circuits numériques du drone, pour la mise à jour du *firmware* (micrologiciel) de l'unité 100, pour la connexion d'une clé USB servant de mémoire auxiliaire de stockage des vidéos ou photos, ou encore pour le branchement d'une clé 3G/4G de connexion directe à un réseau cellulaire permettant de déporter dans un serveur *cloud* distant, auprès duquel est enregistré le drone, un certain nombre d'opérations et calculs de pilotage, de traitement d'image, etc. au lieu de les exécuter au sein du processeur embarqué, ou bien de transférer à ce serveur *cloud* les séquences d'images prises par la caméra ;
- une prise 122 "radiocommande" du type couramment utilisé avec les récepteurs RF de modélisme, si l'utilisateur souhaite piloter le drone en utilisant un autre canal de transmission des informations que la liaison WiFi de l'antenne 26 ;
- une mémoire auxiliaire 124 formant enregistreur de données de vol (FDR) ;
- éventuellement, une mémoire additionnelle 126 pour le stockage notamment des images prises par la caméra frontale.

Le module 24 intègre par ailleurs un circuit électronique de puissance aussi appelé carte de puissance 200 comprenant des circuits permettant d'alimenter directement le système de propulsion, branché sur une prise 202 permettant de délivrer les courants élevés correspondants (typiquement une alimentation triphasée 15 ampères).

Le circuit électronique de puissance 200 comprend également une pluralité de sorties de puissance 204 pour le branchement des servomoteurs de commande des gouvernes. Dans l'exemple illustré, le module intégré 24 est muni de six sorties de ce type, dont deux seulement sont utilisées dans le cas particulier d'une aile volante ne comprenant que deux gouvernes 18 à contrôler. Le contrôle est opéré, de manière en elle-même classique par une modulation en largeur d'impulsions PWM.

Le module intégré 24 est également muni d'un connecteur 300 de liaison à la batterie 32, par exemple un connecteur de type XT60, qui est un type largement utilisé dans le monde du modélisme.

Du point de vue de la connectique, le module intégré 24 se présente comme illustré sur les Figures 4a, 4b et 4c, avec :
- deux connecteurs 118 en partie avant pour le raccordement des antennes RF ;
- deux prises USB 120 en partie arrière ;
- une prise RC 122 en partie arrière ;
- une prise 202 de raccordement au système de propulsion ;
- six sorties PWM d'alimentation de servomoteurs, dont deux sont utilisées pour la commande des gouvernes de contrôle de trajectoire ; et
- un connecteur de batterie 300.

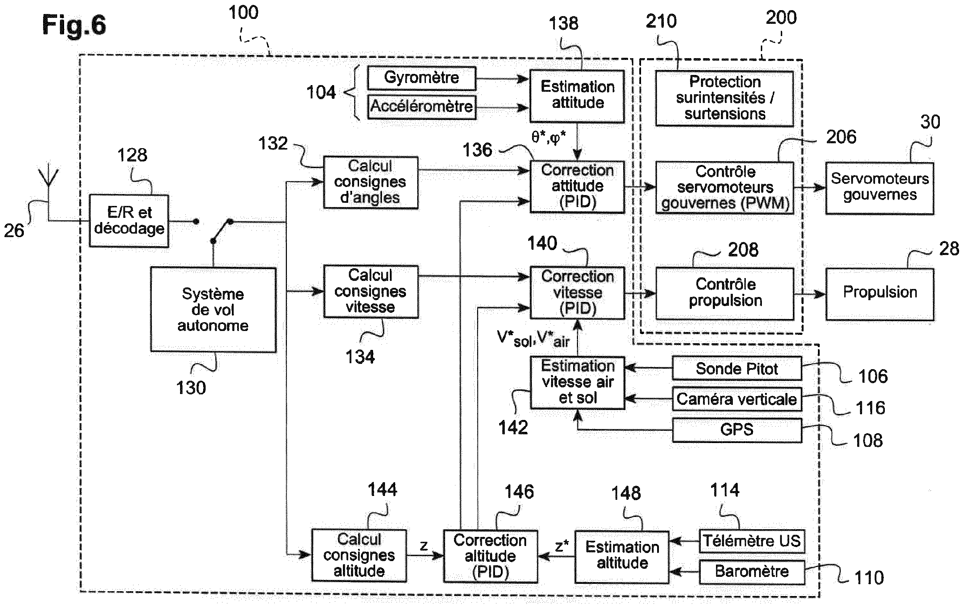

On va maintenant décrire, en référence au schéma par blocs de la Figure 6, les différents organes d'un système de pilote automatique du drone implémenté dans l'unité électronique 100, intégrés au sein du module selon l'invention. Le système de pilote automatique est apte à contrôler le système de propulsion et les gouvernes du drone lors du pilotage manuel assisté du drone et/ou du vol autonome du drone.

Les instructions de pilotage provenant de la télécommande utilisateur en mode de pilotage assisté ("instructions externes") sont reçues et décodées par un module décodeur 128, qui délivre des instructions de type "tourner à droite" ou "tourner à gauche", "monter" ou "descendre", "accélérer" ou "ralentir". Ces instructions sont par exemple des instructions proportionnelles générées au moyen de manipulateurs ou commandes tels que des manches à balai de l'appareil de télécommande 22 en fonction de l'évolution que l'utilisateur souhaite donner à la trajectoire du drone.

En mode de vol autonome, le module de vol autonome 130 du pilote automatique 100 génère lui-même des instructions ("instructions internes") correspondant à une trajectoire imposée telle que par exemple décollage automatique, atterrissage automatique, orbite autour d'un point prédéterminé, etc. On notera par ailleurs que, dans un mode particulier de "surpilotage" l'utilisateur a la faculté de superposer ses propres instructions (externes) à celles automatiquement générées (internes) par le module de vol autonome 130, par exemple pour intervenir sur une trajectoire imposée par le module de vol autonome 130 afin de corriger cette trajectoire.

Les instructions de pilotage externes et/ou internes sont appliquées à un module 132 de calcul de consignes d'angles d'attitude du drone (consignes θ d'angle de tangage et ϕ d'angle de roulis), à un module 134 de calcul de consignes de vitesse du drone (consigne V de vitesse), et à un module 144 de calcul de consignes d'altitude du drone (consigne z d'altitude).

À partir i) des instructions de pilotage externes et/ou internes telles que définies plus haut et ii) d'un modèle du comportement aérodynamique du drone en vol, préalablement déterminé et conservé en mémoire, chacun des modules 132, 134, 144 détermine des consignes correspondantes, respectivement d'angle de tangage θ et d'angle de roulis ϕ, de vitesse V et d'altitude z.

Pour une instruction interne ou externe de virage, le module 132 de calcul de consignes d'angles détermine au moins une consigne d'angle telle que le roulis ϕ, une consigne de tangage θ étant produite par un module de correction d'altitude 146, qui sera décrit en détail plus bas. En effet, une instruction en virage nécessite d'agir sur le moteur et sur les gouvernes, car en tournant le drone va perdre de la vitesse. Si aucune instruction de changement de vitesse ou d'altitude n'est donnée par l'utilisateur avec l'instruction de virage, pour compenser la perte d'altitude le module de correction d'altitude 146 détermine des consignes de tangage et de vitesse, calculées à partir de la dernière instruction avant l'instruction de virage pour maintenir le drone à vitesse et altitude constantes pendant le virage.

Les consignes d'angle de tangage θ et d'angle de roulis ϕ produites par le module 132 et par le module 146 sont appliquées à un module de correction d'attitude 136 de type régulateur PID. Ce module 136 corrige les consignes délivrées par les modules 132 et 146 en fonction de l'attitude instantanée effective du drone (angle de tangage θ* et angle de roulis ϕ*), déterminée par un module 138 d'estimation d'attitude à partir des données gyrométriques et accélérométriques fournies par les capteurs de la centrale inertielle du drone 104.

Les consignes corrigées résultantes produites en sortie du module 136 sont transmises à un module de puissance 206 de contrôle des servomoteurs des gouvernes. Ce module génère des signaux PWM contrôlés, appliqués aux différents servomoteurs 30 d'entrainement des gouvernes.

Pour une instruction interne ou externe d'augmentation/diminution de vitesse, le module 134 de calcul de consignes de vitesse détermine une consigne de vitesse V. Une seconde consigne de vitesse V est déterminée par le module 146 précité de correction d'altitude (module qui détermine également la consigne de tangage θ.

Les consignes de vitesse V produites par le module 134 et par le module 146 sont appliquées à un module de correction de vitesse 140 de type régulateur PID (les deux consignes de vitesse étant combinées avec priorité de correction donnée au maintien de l'altitude). Ce module 140 corrige la consigne de vitesse V délivrée par les modules 134 et 146 et en fonction des vitesses sol V*ₛₒₗ et air V*ₐᵢᵣ instantanées effectives du drone, telles que déterminées par un module 142 d'estimation des vitesses air et sol du drone à partir des données délivrées par la sonde de Pitot 106 (pour la vitesse air) et par l'analyse de l'image de la caméra verticale ainsi que par les données du module GPS 62 (pour la vitesse sol).

Les consignes de vitesse corrigées résultantes produites en sortie du module 140 sont transmises à un module de puissance 208 de contrôle du groupe propulseur 28. Ce module 208 génère un courant contrôlé permettant de faire varier de la manière voulue le régime du groupe propulseur 28, et donc la poussée de l'hélice 14.

Les instructions, internes ou externes, de montée/descente et/ou de virage sont appliquées au module de calcul de consigne d'altitude 144, qui délivre une consigne z d'altitude du drone. Cette consigne z est appliquée au module 146 de correction d'altitude, qui est par exemple un module de type régulateur PID. Ce module 146 corrige la consigne d'altitude z en fonction de l'altitude instantanée effective z* du drone, déterminée par un module d'estimation d'altitude 148 à partir des données fournies par le télémètre à ultrasons et par le capteur barométrique. Ici encore, lorsqu'une instruction de vitesse est donnée, les modules de correction d'altitude 146 et d'attitude 136 calculent les consignes de manière à donner la priorité au maintien de l'altitude et du cap du drone.

Les consignes corrigées résultantes de correction d'altitude délivrées par le module 146 comprennent une consigne de tangage θ et une consigne de vitesse V, car l'augmentation de l'altitude du drone est produite en augmentant le régime moteur et en cabrant le drone, et *vice versa* pour une diminution de l'altitude (une perte d'altitude pouvant également, comme expliqué plus haut, résulter d'une instruction de virage, cette perte d'altitude devant être compensée).

Dans un mode de réalisation particulier, les modules du pilote automatique 100 sont mis en oeuvre de manière logicielle. Les modules sont prévus sous la forme d'applications logicielles enregistrées dans une mémoire du drone 10 et exécutées par un processeur du drone 10. En variante, au moins un des modules est un circuit électronique spécifique ou un circuit logique programmable.

Les différents modules fonctionnels 128 à 148 que l'on vient de décrire, ainsi que les capteurs 104, 106, 108, 110, 114 et 116 utilisés par ces modules, sont tous situés dans le circuit électronique 100.

En revanche, les modules 206 et 208 de contrôle des servomoteurs des gouvernes et de contrôle du système de propulsion sont situés sur le circuit électronique de puissance 200, distinct du circuit électronique 100. Ceci permet de séparer électriquement les circuits ne traitant que des signaux faibles (sur le circuit 100) de ceux traitant des signaux de puissance (sur la carte le circuit 200).

Le circuit 200 est avantageusement muni d'un module propre 210 de protection contre les surintensités et/ou les surtensions, notamment de protection contre des courts-circuits éventuels au niveau des connecteurs de liaison au servomoteur ou au moteur d'hélice.

La protection des circuits de puissance étant ainsi assurée de façon autonome, indépendamment du circuit électronique 100 qui reste cantonné au recueil et au traitement des signaux faibles, non susceptibles d'engendrer des courts-circuits ou autres anomalies destructives de ce type.

## Revendications

1. Un module intégré de contrôle/commande pour drone volant à voilure fixe, le drone volant (10) comprenant un système de propulsion et des gouvernes,
ce module (24) comprenant un boitier (48) dans lequel sont intégrés :
- un circuit électronique (100) comportant :
• un pilote automatique apte à contrôler le système de propulsion et les gouvernes du drone en pilotage manuel assisté et/ou en vol autonome ; et
• une pluralité de capteurs d'attitude, d'altitude, de vitesse, d'orientation et/ou de position du drone (104-116) ;
- une interface de connexion au système de propulsion et aux gouvernes ; et
- une interface de connexion à une batterie (32),
module dans lequel le pilote automatique est apte à élaborer des consignes de commande dudit système de propulsion et desdites gouvernes, ces consignes de commande étant élaborées en fonction :
• des données délivrées par ladite pluralité de capteurs intégrés au boitier ; et
• d'instructions externes de pilotage reçues par le pilote automatique en provenance d'un appareil de télécommande distant, et/ou d'instructions internes de pilotage générées au sein du pilote automatique en vol autonome,
module ***caractérisé en ce que*** le boitier intègre en outre :
- un circuit électronique de puissance (200), comprenant ladite interface de connexion au système de propulsion et aux gouvernes, et apte à :
• recevoir en entrée lesdites consignes de commande élaborées par le pilote automatique du circuit électronique, et
• délivrer en sortie des signaux correspondants d'alimentation du système de propulsion et d'alimentation des gouvernes,
lesdits signaux d'alimentation du système de propulsion étant des signaux d'alimentation directe du système de propulsion, comprenant des courants contrôlés aptes à faire varier le régime moteur dudit système de propulsion.

2. Le module de la revendication 1, dans lequel le module intègre en outre :
- au moins une caméra video (20), mécaniquement solidaire du module.

3. Le module de la revendication 1, dans lequel le module intègre en outre :
- une interface (118) de connexion du circuit électronique à au moins une antenne radiofréquence (26).

4. Le module de la revendication 1, dans lequel le module intègre en outre :
- une interface (120, 122) d'échange de données externes avec ledit circuit électronique.

5. Le module de la revendication 1, dans lequel le circuit électronique (100) est réalisé sur une première carte et le circuit électronique de puissance (200) est réalisé sur une seconde carte, distincte de la première carte.

6. Le module de la revendication 5, dans lequel la seconde carte comprend en outre un circuit de protection (210) du circuit électronique de puissance (200) contre les surintensités et/ou surtensions.

7. Un drone volant à voilure fixe (10), comprenant :
- un corps de drone (12) ; et
- des moyens de contrôle de vol liés au corps de drone, comprenant un système de propulsion et des gouvernes,
drone **caractérisé en ce que** le corps du drone comprend un logement (36) apte à recevoir de manière séparable un module intégré (24) selon l'une des revendications 1 à 6.

8. Le drone de la revendication 7, dans lequel la forme intérieure du logement (36) du corps du drone est complémentaire de la forme extérieure de l'enveloppe du boitier (48) du module intégré (24).

9. Le drone de la revendication 8, incluant en outre ledit module intégré (24) selon l'une des revendications 1 à 6.
